# EUROPEAN PATENT APPLICATION

(11) **EP 3 791 705 A1**
(43) Date of publication of application: **17.03.2021**
(21) Application number: 20195798.2
(22) Date of filing: 11.09.2020
(51) Int. Cl.: A01B 59/06, B60D 1/44

(54) **AN ADJUSTMENT ELEMENT FOR A TRACTOR'S THREE-POINT HITCH**

(30) Priority: 12.09.2019 GB 201913162
(71) Applicant: Dickson, Philip, Moate County, Westmeath (IE)
(72) Inventor: Dickson, Philip, Moate County, Westmeath (IE)
(74) Representative: O'Connor, Michael Donal

(57) **Abstract**

This invention relates to an adjustment element (1, 100) for the lift arms (201, 203) of a tractor's three point hitch. The adjustment element comprises an elongate arm (3) that is adjustable in length. There are provided a pair of lift arm engagement members (5, 7), one at each end of the elongate arm (3), each configured to be secured to one of the lift arms (201, 203). There is further provided an electrically powered actuator (9) coupled to the elongate arm (3), operable to adjust the length of the elongate arm (3), configured for connection to the electrical supply of a tractor, and a remote control unit (13) configured to control the electrically powered actuator (9) to adjust the length of the elongate arm (3) from a position remote from the elongate arm (3), internal a tractor's cab. In this way, the operator of the tractor can pick up tractor attachments without having to alight from the tractor.

## Description

### Introduction

This invention relates to an adjustment element for a tractor's three-point hitch. More specifically, the present invention relates to an adjustment element for the lift arms, also referred to as the lower links, of a tractor's three-point hitch.

In many ways, the three-point hitch revolutionised the use of tractors in farming from the mid-twentieth century onwards. The three-point hitch resulted in improvements to the efficiency and effectiveness of tractors and opened up a wealth of possibilities for disparate equipment to be mounted on and used on tractors. As a result, an entire industry of tractor attachment manufacture blossomed and there is a plethora of attachments available to the farmer for connection to their tractors three-point hitch.

There are however some problems with the existing offerings. Due to the large number of manufacturers of attachments, there are also a large number of different mounting point locations on the attachments that tend to differ from one manufacturer to another, and from one piece of equipment to another. Despite efforts in the industry to standardise the mounting point locations of tractor attachments, there are still variances between different manufacturers and indeed between different pieces of equipment. This is due in part to the fact that different manufacturers will have different ideas as to what the ideal spacing of the mounting points on the equipment should be and also due in part to the fact that the geometry and physical dimensions/characteristics of one tractor attachment may require different spacing of the mounting points than another. It is not uncommon for farmers to have several tractor attachments from one or more providers with different mounting point locations on the different tractor attachments.

As a result, when changing from one tractor attachment to another, the farmer will often have to alight from their tractor one or more times to adjust the spacing between the lift arms to suit the mounting points of the tractor attachment being engaged. This is highly disadvantageous. First of all, it is time consuming for the farmer to have to alight from their seated position in the tractor one or more times to adjust the spacing between the lift arms of the three-point linkage. This is exacerbated if several different tractor attachments must be used in quick succession on a particular job as substantial time will be wasted aligning the lift arms with the mounting points, reducing productivity. Secondly, there is always a danger that the farmer could injure themselves when climbing up or down from the cab of the tractor and it is undesirable for the farmer to have to do this more than necessary. Thirdly, there is typically a power take off (PTO) of the tractor adjacent the lift arms and this is a notoriously dangerous location for the farmer to be working. Any reduction in the time spent in this area by the farmer is to be welcomed.

United States Patent No. US4,865,134 in the name of Rugen et al discloses an adjustable length strut and tractor linkage for laterally supporting one or both of the lower steering arms of a three-point linkage of a tractor. In order to fix the adjustable length strut in position, the operator of the tractor will have to alight from their position in the cab of the tractor and work in the area adjacent the PTO of the tractor.

United States Patent No. US4,917,406 in the name of Herchenbach et al discloses a length adjustable holding device for the lower steering arm of a three-point coupling device. Again, in order to fix the adjustable length strut in position, the operator of the tractor will have to alight from their position in the cab of the tractor and work in the area adjacent the PTO of the tractor.

United States Patent Application Publication No. US2007/0000673 in the name of Farnsworth et al discloses a coupling assembly for use with a tractor having a three-point hitch assembly. The coupling assembly fits intermediate the hitch and the implement to be mounted such that the implement is coupled to the coupling assembly rather than directly to the tractor three-point mounting hitch. There are a number of shortcomings with this configuration. The coupling assembly construction is relatively complex, is heavy, and is expensive to manufacture. In addition, the coupling assembly will be time consuming to install on the tractors three-point hitch and will not be readily interchangeable with other tractors.

United States Patent No. US3,312,478 in the name of Knaapi discloses another embodiment of rapid hitch device for connecting an implement to a tractor, the hitch device having a frame adapted to be connected to the hitch links of the tractor three-point hitch.

It is an object of the present invention to provide an adjustment element for the lift arms of a tractor's three-point hitch that overcomes at least some of the above-identified problems. It is a further object of the present invention to provide a useful alternative choice for the consumer.

### Statements of Invention

According to the invention there is provided an adjustment element for the lift arms of a tractor's three-point hitch comprising an elongate arm that is adjustable in length, the elongate arm having a pair of lift arm engagement members, one at each end of the elongate arm, one of which being configured to be secured directly to one of the lift arms and the other of which being configured to be secured directly to the other of the lift arms, an electrically powered actuator coupled to the elongate arm operable to adjust the length of the elongate arm, an electrical cable connected at one of its ends to the electrically powered actuator and having an electrical connector at its other end configured for connection to an electrical supply, and a remote control unit configured to control the electrically powered actuator to adjust the length of the elongate arm from a position remote from the elongate arm, internal a tractor's cab.

By having such an adjustment element, it will be possible for the farmer (or indeed any worker that is operating the tractor) to adjust the spacing between the lift arms of the tractor's three-point hitch to suit a particular tractor attachment from a position inside the cab of the tractor. This will obviate the need for the farmer to alight from their tractor one or more times to adjust the positioning of the lift arms to engage a tractor attachment, thereby providing a more efficient and safer work environment. Importantly, the adjustment element operates using an electrical supply and therefore there is no need for the use of the PTO of the tractor or the hydraulic supply and the hydraulic piping associated therewith. Systems have been proposed utilising the hydraulic supply of a tractor however these are fixed permanently to the tractor and take up one of the spool valves of the tractor.

In a preferred embodiment of the invention, the electrical supply is the tractor's electrical supply and the electrical connector is configured for connection to the electrical supply of the tractor.

In one embodiment of the invention there is provided an adjustment element in which the lift arm engagement members are configured to be releasably secured to the lift arms. By having the lift arm engagement members releasably secured to the lift arms, the device can be retrofit to existing tractors, can be moved from one tractor to another and also will enable the apparatus to be removed for servicing of the adjustment element and/or the three-point linkage.

In one embodiment of the invention there is provided an adjustment element in which the lift arm engagement members are each provided with a through bore for receipt of a locking pin to secure the lift arm engagement member to the lift arm. This is seen as a simple yet secure way of connecting the lift arm engagement members to the lift arms that will be quick to install. If desired, the locking pin could be spring loaded.

In one embodiment of the invention there is provided an adjustment element in which the lift arm engagement members are U-shaped.

In one embodiment of the invention there is provided an adjustment element in which the electrically powered actuator comprises an electric motor. This is seen as a simple, clean and reliable device to use as the electrically powered actuator. For example, a high torque, 12V DC motor could be used to good effect. Alternatively, the electrically powered actuator could be a compressor or the like to provide a compressed air supply to operate in conjunction with a pneumatic ram to vary the length of the elongate arm.

In one embodiment of the invention there is provided an adjustment element in which the electric motor has a rotatable shaft having a toothed cog wheel for engagement of complementary teeth on portion of the elongate arm. This is seen as a simple and reliable arrangement to move the portion of the elongate arm.

In one embodiment of the invention there is provided an adjustment element in which the elongate arm comprises a plurality of arm sections slidable with respect to each other.

In one embodiment of the invention there is provided an adjustment element in which there are provided three arm sections, a central arm section and two side arm sections.

In one embodiment of the invention there is provided an adjustment element in which the pair of side arm sections are slidable from side to side in a reciprocal fashion on the main arm section.

In one embodiment of the invention there is provided an adjustment element in which the side arm sections each have a toothed section for engagement of a complementary toothed cog wheel of the electric motor. This is seen as a particularly preferred embodiment as both slidable arm sections can be moved simultaneously to improve speed of adjustment as well as increasing the range of adjustment.

In one embodiment of the invention there is provided an adjustment element in which one of the arm sections is independently adjustable in length. In this way, the starting length of the elongate arm in a compact state may be chosen to suit the particular machine and make of three-point hitch.

In one embodiment of the invention there is provided an adjustable element in which the elongate arm is telescopic. This is seen as another useful alternative embodiment.

In one embodiment of the invention there is provided an adjustment element in which the adjustment element comprises a housing for the elongate arm having a handle formed integrally therewith. Preferably, the housing is moisture proof to protect from the ingress of moisture.

In one embodiment of the invention there is provided an adjustment element in which the remote control unit is a wired controller, with a wire leading from the wired controller to the electrically powered actuator.

In one embodiment of the invention there is provided an adjustment element in which the remote control unit is in line on the electrical cable connected at one of its ends to the electrically powered actuator and having an electrical connector at its other end. In this way, the number of wires are reduced, leading to an element that is less likely to be damaged in operation. For example, the possibility of a wire being dragged into the PTO are reduced, leading to a more robust device.

In one embodiment of the invention there is provided an adjustment element in which the elongate arm is provided with a hinge joint intermediate its ends. By having a hinge joint, this will provide a degree of play when the link arms are splayed apart or contracted, thereby reducing material stress on the components and the link arms. Preferably, the adjustment element is spring loaded at the hinge joint. Indeed, this may also provide a degree of protection to the motor and other components in that if the forces on the components are too great, for example if there is an object preventing the arms from being moved towards or away from each other, the spring loaded override will give way and will prevent the device being damaged once the forces build up to a certain level. Indeed, the motor could be provided with a shut off component that will shut the motor off if the forces on the motor exceed a given level, thereby protecting the motor and the components.

### Detailed Description of the Invention

The invention will now be more clearly understood from the following description of some embodiments thereof given by way of example only with reference to the accompanying drawings, in which:-
Figure 1 is a diagrammatic representation of a first embodiment of adjustment element according to the invention;
Figure 2 is a diagrammatic representation of a second embodiment of adjustment element according to the invention;
Figures 3(a) to 3(d) are diagrammatic representations of the adjustment element of Figure 1 connected to the link arms of a three-point hitch; and
Figures 4(a) to 4(d) are diagrammatic representations of the adjustment element of Figure 1 engaging a tractor attachment.

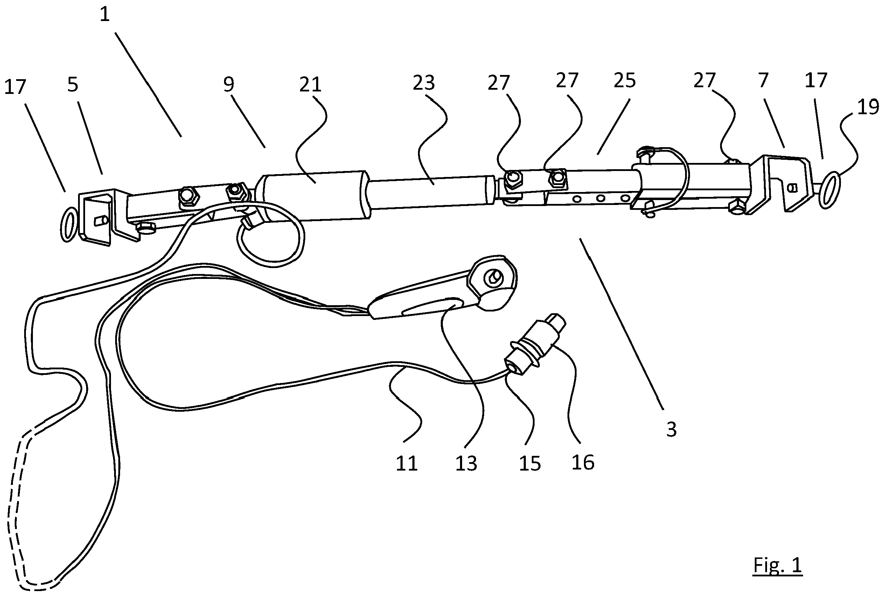

Referring to Figure 1, there is shown a first embodiment of adjustment element, indicated generally by the reference numeral 1, comprising an elongate arm 3 that is adjustable in length. The elongate arm has a lift arm engagement member 5,7, in this case, a U-shaped bracket, at each of its ends, each for engagement of the lift arm (not shown) of a tractor's three-point hitch. There is further provided an electrically powered actuator 9 operable to adjust the length of the elongate arm, an electrical cable 11 (part of which is shown in dashed outline to indicate that the relative length of the cable will typically be longer than that shown) and a remote control unit 13. One end 14 of the electrical cable is connected to the electrically powered actuator and the other end 15 of the electrical cable 11 is provided with an electrical connector 16 configured for connection to the electrical supply of the tractor. The remote control unit 13 comprises a wired unit placed along the length of the electrical cable 11 and is configured to operate the electrically powered actuator 9 to control the length of the elongate arm 3, and hence the spacing between two lift arms of the three-point hitch when connected thereto, from a position remote from the elongate arm, such as internal the cab of the tractor.

In the embodiment shown, the pair of U-shaped brackets are each provided with a locking pin 17 comprising a handle 19 and a helical thread along at least portion of its length. The helical thread engages a complementary helical thread in a bore (not shown) formed in the outer leg of the U-shaped bracket. When the U-shaped bracket is placed over the lift arm, the locking pin 17 is tightened to provide an abutment fit on the lift arm. As an alternative to an abutment fit, a corresponding aperture can be drilled into the lift arm so that the locking pin is inserted into the lift arm. As a further alternative, the locking pin and U-shaped bracket may be configured so that the pin extends through the lift arm or under the lift arm and the free end of the pin opposite the handle, if desired, can engage the opposite bracket and, if desired, a threaded bore in the opposite leg of the U-shaped bracket. Such a configuration will allow for the adjustment element to be removed from the lift arms to allow servicing of the adjustment element and/or the tractor's three-point hitch as well as transfer of the adjustment element from one tractor to another. Alternatively, the lift arm engagement members may be permanently connected to the lift arms by welding, bolts or other way. Ideally though, no welding or drilling would be required and the lift arm engagement members can engage the lift arms without being welded or the lift arms being drilled.

In addition to the foregoing, in the embodiment shown in Figure 1, the electrically powered actuator 9 comprises a cylinder 21 and piston 23 and a mechanism (not shown) internal the cylinder to extend and retract the piston 23, thereby adjusting the length of the elongate arm 3. The mechanism may comprise a motor with geared teeth to drive the piston in a reciprocal direction in and out of the cylinder. The mechanism may be a motor with a screw auger that when rotated will cause the piston to move in a reciprocal direction in and out of the cylinder depending on the direction of rotation of the screw auger. Furthermore, the cylinder 21 and piston 23 may form part of a pneumatic ram and the mechanism may comprise an electrically powered pneumatic pump operable to extend or contract the elongate arm by appropriate delivery of pressurised air to the cylinder. The pneumatic ram may be a double acting ram or a single acting ram with a biasing member to return the piston to a resting position (which may be either fully contracted or fully extended).

The remote-control unit 13 comprises a hand-held unit with a three-way switch for the operator to extend, contract and maintain the length of the elongate arm. The remote-control unit 13 is a wired unit placed along the electrical cable 11 however it could be wireless if desired or could be on a separate control wire fed to the electrically operated actuator. Finally, the elongate arm is provided with a telescopic section 25 and a plurality of hinge joints 27 along its length. The telescopic section 25 allows the basic separation distance between the two lift arm engagement members 5,7 to be determined prior to installation on a machine. In this way, a number of disparate manufacturers and machines may be provided for with one adjustment element. The hinge joints 27 are configured to allow limited bending of the elongate arm along its length. This will accommodate for the widening and narrowing of the angle between the two lift arms as the lift arms are splayed apart upon extension of the elongate arm and brought towards each other upon contraction of the elongate arm.

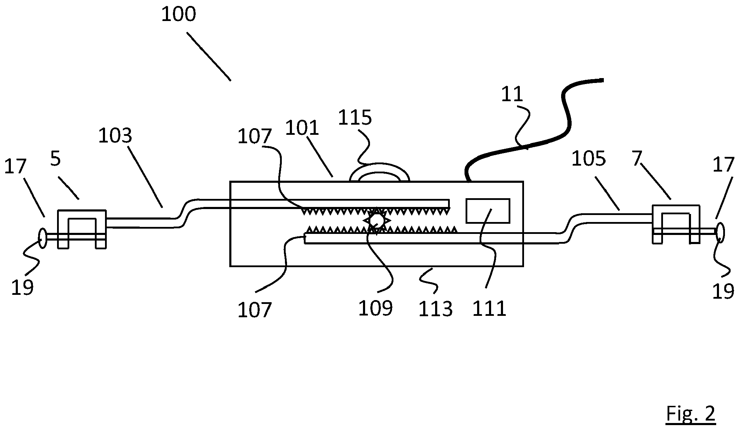

Referring now to Figure 2, there is shown a diagrammatic representation of a second embodiment of adjustment element for the lift arms of a tractor's three point hitch according to the present invention, indicated generally by the reference numeral 100, where like parts have been given the same reference numeral as before. The adjustment element 100 comprises three arm sections, a central arm section 101 and two side arm sections 103, 105. The two side arm sections 103, 105 are slidably moveable in a reciprocal fashion along the central arm section 101. The two arm sections 103, 105 each have a toothed section or portion 107 along portion of their length for engagement of a toothed driving wheel 109, also referred to a toothed cog wheel, driven by an electrical motor 111. It will be understood that as the toothed driving wheel rotates clockwise, the side arms and by extension the lift arms engaged in the lift arm engagement members will be drawn inwardly towards each other and as the toothed driving wheel rotates counter-clockwise, the side arms and the lift arms captured in the lift arm engagement members will be splayed apart. The moving portions are contained in a casing 113 having an integral handle 115. Preferably, the casing 113 is moisture proof.

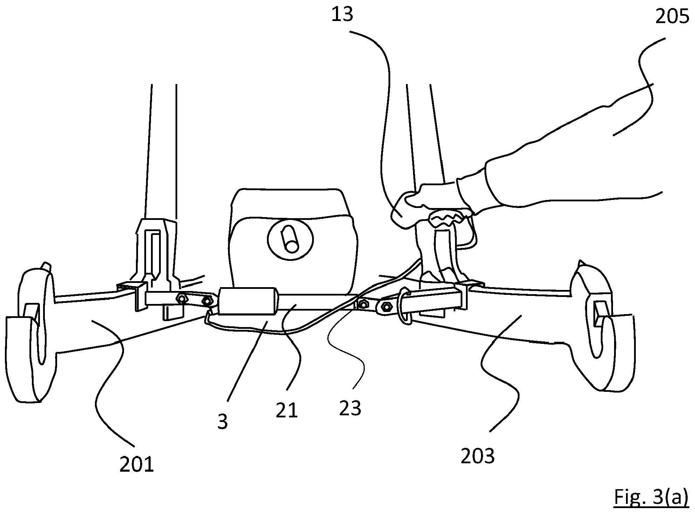

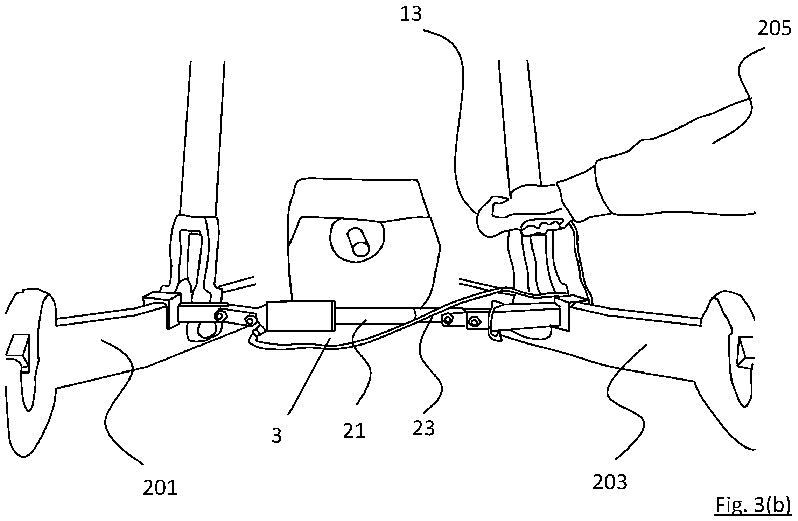

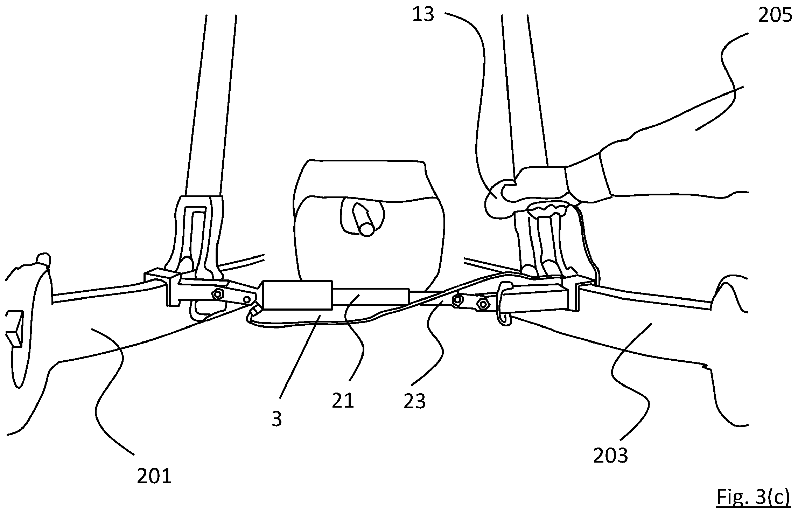

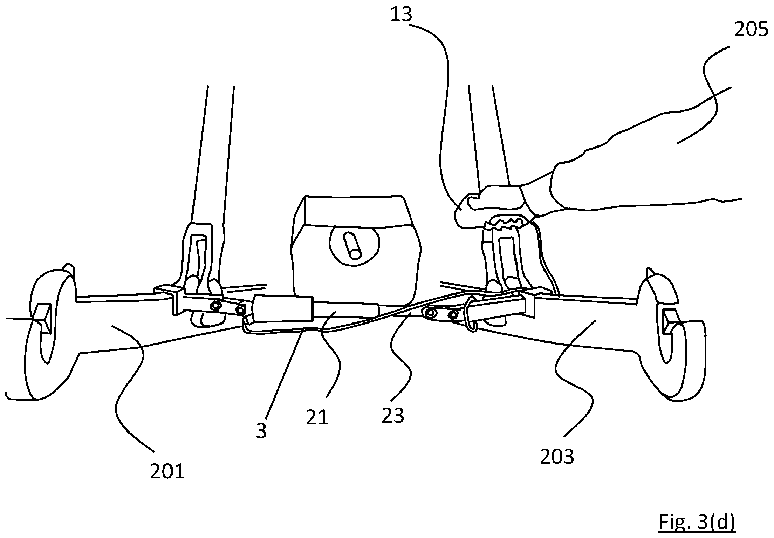

Referring now to Figures 3(a) to 3(d) inclusive, there is shown some diagrammatic representations of an embodiment of adjustment element mounted on the lift arms 201, 203 of a tractor's three-point hitch, where like parts have been given the same reference numeral as before. The PTO of the tractor can be seen between the lift arms forward of the adjustment element on the tractor. In Figure 3(a), the elongate arm is in a fully contracted position with the cylinder 21 and piston 23 at the bottom of their stroke, namely with the piston 23 retracted fully into the cylinder 21. In Figure 3(b), the operator 205 uses the remote control unit 13 to extend the length of the elongate arm and the electrically operated actuator will cause the piston 23 to move out of the cylinder 21 which in turn will move the lift arms 201, 203 of the three-point hitch apart. In Figure 3(c), the operator has continued to operate the electrically operated actuator and the piston 23 continues to move outwardly of the cylinder 21, thereby extending the elongate arm 3 until at Figure 3(d) the piston is at maximum stroke and the elongate arm 3 is fully extended.

In order to move the lift arms closer together once more, the operator 205 simply reverses the switch on the remote control unit 13 and the electrically operated actuator causes the piston 23 to move inwardly into the cylinder 21. Once the separation between the ends of the lift arms is as desired to match the piece of tractor attachment lifting points, the operator allows the switch to assume the default, fixed position. In the embodiment shown, the operator 205 is beside the three-point hitch however it will be understood that the operator would typically be located internal the cab of the tractor.

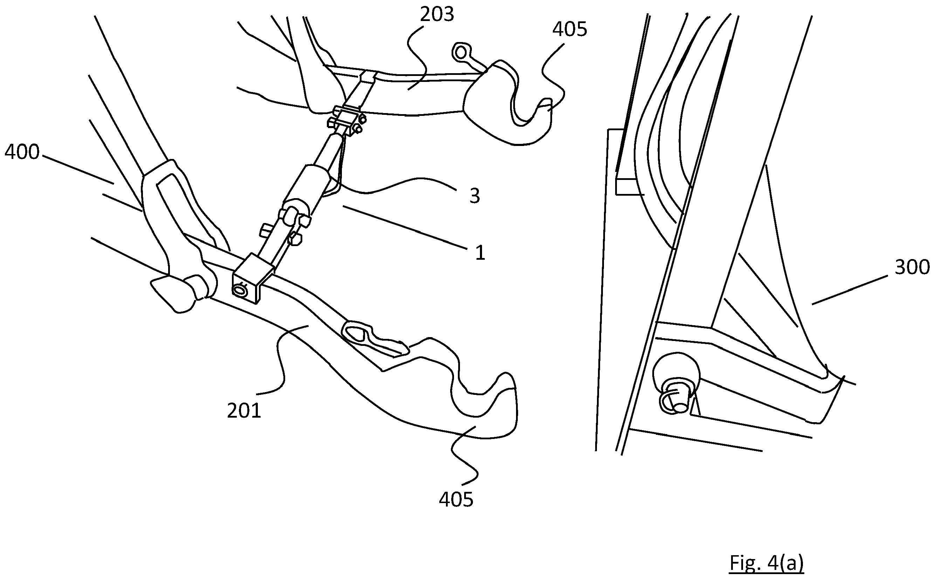

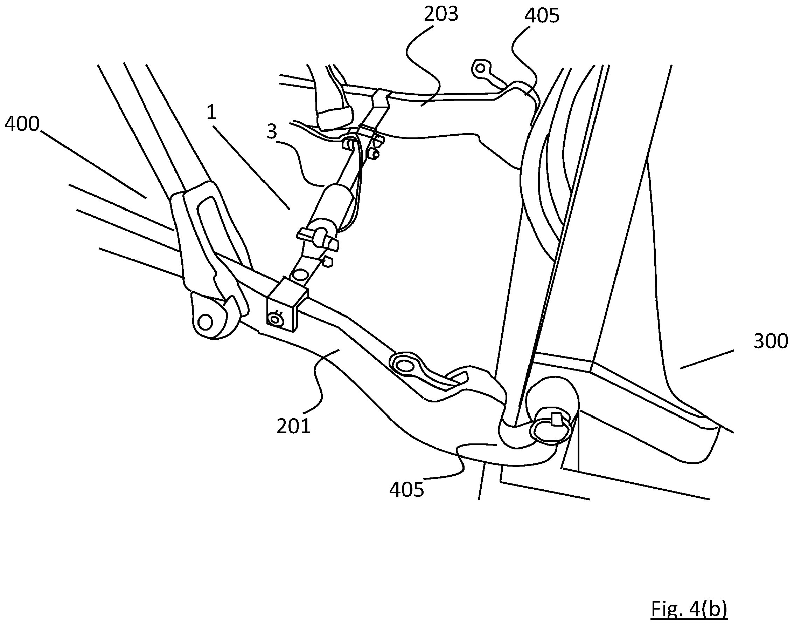

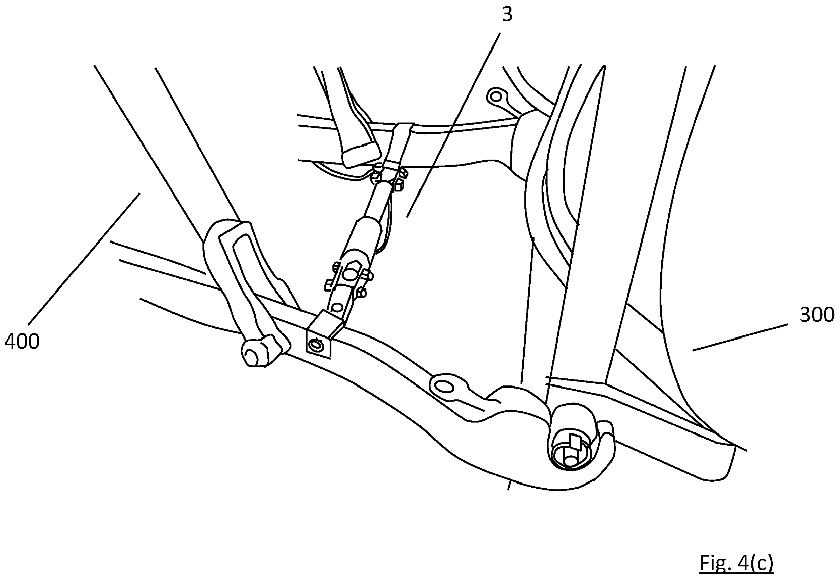

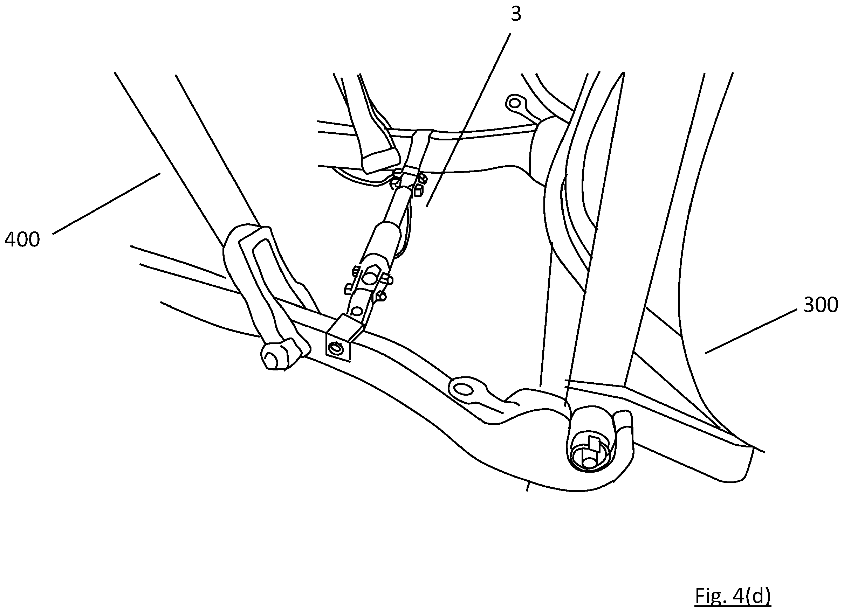

Referring to Figures 4(a) to 4(d) inclusive, there is shown some diagrammatic representation of an embodiment of adjustment element mounted on the lift arms 201, 203 of a tractor's three-point hitch being used to engage a tractor attachment 300, where like parts have been given the same reference numeral as before. In Figure 4(a), the tractor 400 (only part of which is shown) is driven up to the tractor attachment 300. From his/her position inside the cab, the farmer thereafter uses the remote control to adjust the elongate arm 3 to adjust the separation between the lift arms 201, 203 of the three-point hitch. When the lift arms 201, 203 are separated by the correct distance (i.e. the distance between the lifting points on the tractor attachment 400), the tractor 400 is reversed further until the hooks 405 on the end of the lift arms 201, 203 are adjacent the mounting points, as shown in Figure 4(b). Further fine adjustment of the separation between the hooks 405 on the ends of the lift arms 201, 203 is undertaken if necessary by the farmer adjusting the length of the elongate arm 3 and the tractor is then reversed to a point with the hooks below the mounting points of the tractor attachment, as shown in Figure 4(c). The lift arms are then raised, lifting the tractor attachment onto the three-point hitch as illustrated in Figure 4(d). As will be understood, all of this is undertaken by the farmer from a position inside the cab of the tractor.

In order to disengage the tractor attachment, the lift arms are lowered until the hooks 405 are free of the mounting points and the tractor is driven forwards away from the tractor attachment. The farmer will then drive up to the next tractor attachment to be engaged and will carry out the same steps to engage the next tractor attachment.

It will be understood that various modifications could be made to the embodiments hereinbefore described without departing from the present invention. For example, different mechanisms for engaging the lift arms could be provided. Similarly, one or two arms may be moveable on the elongate arm. It may be preferable to have one fixed so that the tractor operator can align the hook on the end of that link arm with the mounting point and then when they adjust the elongate arm, the other hook will move inwardly or outwardly as controlled to match the other mounting point. An electrical motor driving a shaft with a toothed wheel is seen as a preferred embodiment as the electrically operated actuator however other embodiments are envisaged. Various different mechanisms could be used to move the parts of the elongate arm, such as, but not limited to, a rack and pinion arrangement. The electrical supply may be the electrical supply of the tractor or may be provided by a separate battery electrical supply. Indeed, if desired, the battery supply may be a rechargeable battery that is provided integral with or separate to the adjustment element. For example, the battery may be formed in the casing of the adjustment element or may be provided separate thereto. If the rechargeable battery is housed in the casing, a separate wire for the remote control may be provided from the adjustment element to the remote control. The remote control could, if desired, be wireless and communicate with the adjustment element using wireless communications.

The lift arm engagement members are described as being configured to be secured directly to one of the lift arms. By this, what is meant is that the lift arm engagement member at either end of the elongate arm are mounted onto the lift arms, without an intermediate frame therebetween. This will facilitate connecting the adjustment element to the lift arms of the tractor quickly and with ease and will allow for a simpler structure.

In this specification the terms "comprise, comprised, comprises and comprising" and the terms "include, included, includes and including" are all deemed interchangeable and should be afforded the widest possible interpretation.

The invention is not limited to the embodiment hereinbefore described but may be varied in both construction and detail within the scope of the appended claims.

## Claims

1. An adjustment element (1, 100) for the lift arms of a tractor's three point hitch comprising: an elongate arm (3) that is adjustable in length, the elongate arm having a pair of lift arm engagement members (5, 7), one at each end of the elongate arm, one of which being configured to be secured directly to one of the lift arms and the other of which being configured to be secured directly to the other of the lift arms, an electrically powered actuator (9) coupled to the elongate arm operable to adjust the length of the elongate arm, an electrical cable (11) connected at one of its ends (14) to the electrically powered actuator and having an electrical connector (16) at its other end (15) configured for connection to an electrical supply, and a remote control unit (13) configured to control the electrically powered actuator to adjust the length of the elongate arm (3) from a position remote from the elongate arm, internal a tractor's cab.

2. An adjustment element (1, 100) as claimed in claim 1 in which the electrical connector (16) is configured for connection to the electrical supply of a tractor.

3. An adjustment element (1, 100) as claimed in claim 1 or 2 in which the lift arm engagement members (5, 7) are configured to be releasably secured to the lift arms.

4. An adjustment element (1, 100) as claimed in any preceding claim in which the lift arm engagement members (5, 7) are each provided with a through bore for receipt of a locking pin (17) to secure the lift arm engagement member to the lift arm.

5. An adjustment element (1, 100) as claimed in any preceding claim in which the lift arm engagement members (5, 7) are U-shaped.

6. An adjustment element (1, 100) as claimed in any preceding claim in which the electrically powered actuator comprises an electric motor.

7. An adjustment element (1, 100) as claimed in claim 6 in which the electric motor has a rotatable shaft having a toothed cog wheel (109) for engagement of complementary teeth (107) on portion of the elongate arm.

8. An adjustment element (1, 100) as claimed in any preceding claim in which the elongate arm (3) comprises a plurality of arm sections (101, 103, 105) slidable with respect to each other.

9. An adjustment element (100) as claimed in claim 8 in which there are provided three arm sections, a central arm section (101) and two side arm sections (103, 105), and in which the pair of side arm sections (103, 105) are slidable from side to side in a reciprocal fashion on the main arm section (101).

10. An adjustment element (100) as claimed in claim 8 or 9 in which one of the arm sections is independently adjustable in length.

11. An adjustable element (1, 100) as claimed in any preceding claim in which the elongate arm (5) is telescopic.

12. An adjustment element (1, 100) as claimed in any preceding claim in which the adjustment element comprises a housing (113) for the elongate arm having a handle (115) formed integrally therewith.

13. An adjustment element (1, 100) as claimed in any preceding claim in which the remote control unit (13) is a wired controller, with a wire (11) leading from the wired controller to the electrically powered actuator (9).

14. An adjustment element (1, 100) as claimed in claim 13 in which the remote control unit (13) is in line on the electrical cable (11) connected at one of its ends to the electrically powered actuator (9) and having an electrical connector (16) at its other end.

15. An adjustment element (1, 100) as claimed in any preceding claim in which the elongate arm is provided with a hinge joint (27) intermediate its ends.
